(19) Europäisches Patentamt
European Patent Office
Office européen des brevets

(11) **EP 3 991 144 B1**

(12) **EUROPÄISCHE PATENTSCHRIFT**

(45) Veröffentlichungstag und Bekanntmachung des Hinweises auf die Patenterteilung:
**29.01.2025  Patentblatt 2025/05**

(21) Anmeldenummer: **20727977.9**

(22) Anmeldetag: **20.05.2020**

(51) Internationale Patentklassifikation (IPC):
**G07C 5/00** (2006.01)     **G05D 1/00** (2024.01)

(52) Gemeinsame Patentklassifikation (CPC):
**G07C 5/008**

(86) Internationale Anmeldenummer:
**PCT/EP2020/064087**

(87) Internationale Veröffentlichungsnummer:
**WO 2020/259933 (30.12.2020 Gazette 2020/53)**

(54) **VERFAHREN, COMPUTERPROGRAMM UND VORRICHTUNG ZUR VERARBEITUNG VON DURCH EIN KRAFTFAHRZEUG ERFASSTEN DATEN**

METHOD, COMPUTER PROGRAM, AND DEVICE FOR PROCESSING DATA DETECTED BY A MOTOR VEHICLE

PROCÉDÉ, PROGRAMME D'ORDINATEUR ET DISPOSITIF POUR TRAITER DES DONNÉES ACQUISES PAR UN VÉHICULE À MOTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **26.06.2019   DE 102019209226**

(43) Veröffentlichungstag der Anmeldung:
**04.05.2022   Patentblatt 2022/18**

(73) Patentinhaber: **VOLKSWAGEN AKTIENGESELLSCHAFT
38440 Wolfsburg (DE)**

(72) Erfinder:
• **MAX, Stephan
  38518 Gifhorn (DE)**
• **WEGNER, Martin
  38104 Braunschweig (DE)**
• **ALAZZAWI, Sabina
  80807 München (DE)**
• **NIESTROJ, Richard
  80802 München (DE)**

(56) Entgegenhaltungen:
EP-A1- 2 423 885         US-A1- 2016 104 377
US-A1- 2018 261 021      US-A1- 2019 086 925

**Beschreibung**

Die vorliegende Erfindung betrifft ein Verfahren, ein Computerprogramm mit Instruktionen und eine Vorrichtung zur Verarbeitung von durch ein Kraftfahrzeug erfassten Daten. Die Erfindung betrifft weiterhin ein Kraftfahrzeug sowie ein Backend, in denen ein erfindungsgemäßes Verfahren oder eine erfindungsgemäße Vorrichtung eingesetzt wird.

In modernen Kraftfahrzeugen werden vielfältige Daten gesammelt. Im Zuge der zunehmenden Fahrzeugvernetzung besteht ein Interesse daran, die vom Fahrzeug gesammelten Daten für eine weitergehende Auswertung zu nutzen. Zu diesem Zweck können Daten aus dem Kraftfahrzeug entnommen und einem Backend zugeführt werden. Beispielsweise können Daten von Fahrzeugsensoren orts-und zeitbezogen für Anwendungen in Bezug auf Wetterprognosen, Parkplatzbelegungen oder auch Verkehrsflussdaten extrahiert werden. Im Backend werden die Daten dann mit anderen Daten auf einer Karte kombiniert und den nutzenden Funktionen zurückgeführt.

Ein wichtiger Anwendungsfall für die Datenerhebung ist der Aufbau einer Datenbank für anonymisierte Schwarmdaten zur Forschung, Entwicklung und Absicherung automatischer Fahrfunktionen. Der Anspruch an hochautomatisierte Fahrzeuge ist es, dass diese eine Fülle an unterschiedlichen und teilweise komplexen Szenarien im Straßenverkehr unfallfrei bewältigen. Da die meisten dieser Szenarien nur selten auftreten, gestaltet sich das Testen im realen Straßenverkehr sowohl zeit- als auch kostenintensiv. Für die Entwicklung automatischer Fahrfunktionen bis hin zur Serienreife ist eine signifikante Datenbasis zur Absicherung der Algorithmen erforderlich, die nicht mehr durch klassische Testfahrten per Dauerlauf erreicht werden kann. Es bedarf daher eines Datenpools mit Daten aus möglichst vielfältigen anspruchsvollen Verkehrsszenarien, idealerweise gespeist aus Realfahrten, mit welchem die Algorithmen so trainiert und kontinuierlich verbessert werden, dass die Fahrzeuge im Straßenverkehr unter allen Eventualitäten angemessene Entscheidungen treffen und sicher agieren können.

Die aus einem Fahrzeug entnommenen Daten lassen unter Umständen allerdings einen Rückschluss auf persönliche oder sachliche Verhältnisse einer bestimmten oder zumindest bestimmbaren natürlichen Person zu, beispielsweise über den Fahrer des Kraftfahrzeuges.

Eine derartige Erhebung und Nutzung der Daten ist gemäß den jeweils geltenden Datenschutzgesetzen in der Regel nur mit einer Einverständniserklärung der betroffenen Person möglich. Zwar sind Verbraucher in der heutigen Zeit insbesondere im Bereich der Software durchaus damit vertraut, Nutzungsbedingungen zu akzeptieren und Freigaben für die Datenauswertung zu erteilen, im Automobilbereich ist dies bisher jedoch nicht üblich. Eine Einverständniserklärung zur Nutzung der Daten zu erhalten, ist daher nicht immer einfach. Zudem muss im Rahmen von Softwareaktualisierungen gegebenenfalls eine neue Einverständniserklärung vom Nutzer eingeholt werden, was für den Nutzer auf Dauer ein Ärgernis sein kann.

Zur Gewährleistung des Datenschutzes können die Daten unterschiedlichen Anonymisierungsverfahren zugeführt werden. Ziel dieser Anonymisierungsverfahren ist es, die Identität des Datenerzeugers in einer Anonymisierungsgruppe zu verbergen.

Vor diesem Hintergrund beschreibt DE 10 2011 106 295 A1 ein Verfahren zum bidirektionalen Übertragen von Daten zwischen Kraftfahrzeugen und einem Dienstanbieter. Bei dem Verfahren werden Verkehrsdaten, die einen Verkehrszustand beschreiben und von den Kraftfahrzeugen stammen, an einen Dienstanbieter bereitgestellt. Dies erfolgt ausschließlich über eine von einem Sicherheitsbetreiber betriebene Backend-Servervorrichtung. Mittels der Backend-Servervorrichtung werden die Verkehrsdaten vor dem Übertragen an den Dienstanbieter anonymisiert.

Ein weiteres Verfahren zum anonymen Bereitstellen von Fahrzeugdaten beschreibt DE 10 2015 213 393 A1. Bei dem Verfahren werden Original-Fahrzeugdaten bereitgestellt, die befahrene Streckenabschnitte einer von einem Kraftfahrzeug gefahrenen Fahrstrecke und den Zeitbereich des Befahrens der Streckenabschnitte angeben. Zusätzlich werden künstliche Fahrzeugdaten generiert, die mindestens eine weitere künstliche Fahrstrecke angeben. Bei der künstlichen Fahrstrecke kann es sich um eine zeitliche verschobene Version eines tatsächlich befahrenen Streckenabschnitts handeln. Die Original-Fahrzeugdaten und die künstlichen Fahrzeugdaten werden schließlich übermittelt.

Bei einem anderen Ansatz zur Anonymisierung werden die Daten hinsichtlich Ort oder Zeit verschleiert. Hierbei werden die Daten im Raum oder in der Zeit zufällig additiv verschoben. Auf diese Weise ist eine Identifikation des ursprünglichen Fahrzeugs nur noch in Bezug auf eine Gruppe von Fahrzeugen möglich.

In diesem Zusammenhang beschreibt DE 10 2016 225 287 A1 ein Verfahren zur Verarbeitung von durch ein Kraftfahrzeug erfassten Daten. In einem ersten Schritt wird ein von einem Kraftfahrzeug erfasstes Datum empfangen. Anschließend wird eine örtliche oder zeitliche Verschleierung auf das empfangene Datum angewendet. Das verschleierte Datum wird schließlich zur Auswertung weitergegeben. Die Verschleierung des empfangenen Datums kann dabei innerhalb des Kraftfahrzeugs oder in einem mit dem Kraftfahrzeug in Verbindung stehenden Empfangssystem erfolgen.

DE 10 2018 006 281 A1 beschreibt ein Verfahren zum Betrieb eines Assistenzsystems eines Fahrzeuges. Bei dem Verfahren werden Objekte in einer Umgebung des Fahrzeuges detektiert. In Bezug auf ein erfasstes Objekt wird eine Systemaktion ausgelöst, wenn in einer Datenbank ein Eintrag zu dem Objekt enthalten ist, welcher die Systemaktion als berechtigt markiert. Eine Anonymisierung der Daten erfolgt dahingehend, dass Identifizierungsdaten entfernt und eine räumliche Verschleierung durchgeführt wird.

Bei einem weiteren Ansatz zur Anonymisierung werden die Daten segmentiert. Hierbei werden die Daten eines Fahrzeugs während der Fahrt in unterschiedliche Segmente geteilt. Auf diese Weise wird sichergestellt, dass mögliche Datennutzer nicht den vollständigen Datensatz der Fahrt des Fahrzeugs ermitteln können. Der Gesamtweg wird in der Regel nur von sehr wenigen, ggf. auch nur einem einzigen Fahrzeug durchfahren. Die einzelnen Segmente werden jedoch von vielen Fahrzeugen durchfahren.

In diesem Zusammenhang beschreibt US 8,255,393 B1 ein Verfahren zum Aufbau einer Benutzerreputationsdatenbank zur Verwendung in einem Benutzerstandort-Datensystem. Bei dem Verfahren werden Benutzerstandortinformationen empfangen, die persönlich identifizierbare Daten eines Benutzers und Benutzerpositionsdaten enthalten. Die Benutzerpositionsdaten können tatsächliche geografische Positionen des Benutzers darstellen oder auch nicht. Die Benutzerstandortinformationen werden zwischengespeichert und analysiert, um einen Spam-Score zu erhalten, der den Benutzerpositionsdaten zugeordnet ist und anzeigt, ob die Benutzerpositionsdaten die tatsächlichen geografischen Positionen des Benutzers darstellen. Entsprechende Daten werden auch der Benutzerreputationsdatenbank zur Verfügung gestellt, um einen dem Benutzer zugeordneten Benutzerreputationsscore zu speichern. Zum Zwecke des Datenschutzes werden einzelne Bewegungsabschnitte aus den Positionsdaten entfernt.

US 2018/0261021 A1 beschreibt ein Verfahren zur Analyse von Merkmalen eines Fahrzeugführers. Das Verfahren wird durch ein Zusammenwirken eines Fahrzeuganalysesystems in einem Fahrzeug und einer stationären, vom Fahrzeug entfernten Verarbeitungseinheit durchgeführt. Das Fahrzeuganalysesystem bestimmt einen Parameter für die Fahrereigenschaften des fahrenden Fahrzeugs und sendet den Parameter an die stationäre Verarbeitungseinheit. Die stationäre Verarbeitungseinheit leitet aus diesem Parameter eine Metrik als Fahrercharakteristik ab.

Es ist eine Aufgabe der Erfindung, Lösungen zur Verarbeitung von durch ein Kraftfahrzeug erfassten Daten bereitzustellen, die eine Segmentierung von entlang einer zurückgelegten Wegstrecke erfassten Daten mit reduzierten Lücken zwischen den Segmenten ermöglicht.

Diese Aufgabe wird durch ein Verfahren mit den Merkmalen des Anspruchs 1, durch ein Computerprogramm mit Instruktionen gemäß Anspruch 4 und durch eine Vorrichtung mit den Merkmalen des Anspruchs 5 gelöst. Bevorzugte Ausgestaltungen der Erfindung sind Gegenstand der abhängigen Ansprüche.

Gemäß einem ersten Aspekt der Erfindung umfasst ein Verfahren zur Verarbeitung von durch ein Kraftfahrzeug erfassten Daten die Schritte:

- Empfangen von entlang einer vom Kraftfahrzeug zurückgelegten Wegstrecke erfassten Daten;
- Unterteilen der erfassten Daten in Segmente der zurückgelegten Wegstrecke, die eine Länge $l_{seg}$ aufweisen und jeweils durch eine Lücke voneinander getrennt sind, wobei die den Lücken entsprechenden Daten gelöscht werden und die Längen $l_{gap}$ der Lücken zwischen den Segmenten zufällig aus einem Längenintervall der Länge $l_{gap\_rand}$ gewählt sind, mit $l_{gap}+l_{gap\_rand}<l_{seg}$;
- Anwenden einer örtlichen Verschleierung auf die Daten der Segmente der zurückgelegten Wegstrecke, bei der Startpunkte der Segmente um einen Offset $l_{rausch}$ aus einem vorgegebenen Intervall verschoben werden, mit $l_{gap}+l_{gap\_rand}+l_{rausch}>l_{seg}$; und
- Weitergeben der verschleierten Daten zur weiteren Verarbeitung.

Gemäß einem weiteren Aspekt der Erfindung enthält ein Computerprogramm Instruktionen, die bei Ausführung durch einen Computer den Computer zur Ausführung der folgenden Schritte zur Verarbeitung von durch ein Kraftfahrzeug erfassten Daten veranlassen:

- Empfangen von entlang einer vom Kraftfahrzeug zurückgelegten Wegstrecke erfassten Daten;
- Unterteilen der erfassten Daten in Segmente der zurückgelegten Wegstrecke, die eine Länge $l_{seg}$ aufweisen und jeweils durch eine Lücke voneinander getrennt sind, wobei die den Lücken entsprechenden Daten gelöscht werden und die Längen $l_{gap}$ der Lücken zwischen den Segmenten zufällig aus einem Längenintervall der Länge $l_{gap\_rand}$ gewählt sind, mit $l_{gap}+l_{gap\_rand}<l_{seg}$;
- Anwenden einer örtlichen Verschleierung auf die Daten der Segmente der zurückgelegten Wegstrecke, bei der Startpunkte der Segmente um einen Offset $l_{rausch}$ aus einem vorgegebenen Intervall verschoben werden, mit $l_{gap}+l_{gap\_rand}+l_{rausch}>l_{seg}$; und
- Weitergeben der verschleierten Daten zur weiteren Verarbeitung.

Der Begriff Computer ist dabei breit zu verstehen. Insbesondere umfasst er auch Steuergeräte, Workstations und andere prozessorbasierte Datenverarbeitungsvorrichtungen.

Das Computerprogramm kann beispielsweise für einen elektronischen Abruf bereitgestellt werden oder auf einem computerlesbaren Speichermedium gespeichert sein.

Gemäß einem weiteren Aspekt der Erfindung weist eine Vorrichtung zur Verarbeitung von durch ein Kraftfahrzeug erfassten Daten auf:

- einen Eingang zum Empfangen von entlang einer vom Kraftfahrzeug zurückgelegten Wegstrecke erfassten Daten;
- eine Datenverarbeitungseinheit zum Unterteilen der erfassten Daten in Segmente der zurückgelegten Wegstrecke, die eine Länge $l_{seg}$ aufweisen und jeweils durch eine Lücke voneinander getrennt sind, wobei die den Lücken entsprechenden Daten gelöscht werden und die Längen $l_{gap}$ der Lücken zwischen den Segmenten zufällig aus einem Längenintervall der Länge $l_{gap\_rand}$ gewählt sind, mit $l_{gap}+l_{gap\_rand}<l_{seg}$;
- eine Anonymisierungseinheit zum Anwenden einer örtlichen Verschleierung auf die Daten der Segmente der zurückgelegten Wegstrecke, bei der Startpunkte der Segmente um einen Offset $l_{rausch}$ aus einem vorgegebenen Intervall verschoben werden, mit $l_{gap}+l_{gap\_rand}+l_{rausch}>l_{seg}$; und
- einen Ausgang zum Weitergeben der verschleierten Daten zur weiteren Verarbeitung.

Bei der erfindungsgemäßen Lösung wird die Unterteilung der erfassten Daten in Segmente mit einer örtlichen Verschleierung kombiniert. Dadurch lässt sich die Wahrscheinlichkeit, dass nur Segmente mit nicht rekombinierbaren Signalen vorliegen, deutlich steigern. Im Ergebnis können so die Lücken zwischen den Segmenten klein gehalten werden, was in Hinblick auf die Sammlung von Daten wünschenswert ist, ohne dass eine deutliche Vergrößerung der erforderlichen Anonymisierungsgruppe notwendig wird. Diese könnte andernfalls den Datennutzen deutlich einschränken.

Erfindungsgemäß sind Längen der Lücken zwischen den Segmenten zufällig aus einem Längenintervall gewählt. Dadurch ist sichergestellt, dass aufeinanderfolgende Segmente unabhängig voneinander sind. Bei Lücken mit konstanter Länge könnte andernfalls durch Auswertung der Start- und Endpunkte der Segmente festgestellt werden, ob Segmente vom gleichen Fahrzeug stammen.

Gemäß einem Aspekt der Erfindung erfolgt das Anwenden der örtlichen Verschleierung einzeln für jedes Segment. Zu diesem Zweck werden Startpunkte der Segmente um einen Rauschwert aus einem Rauschintervall verschoben. Auf diese Weise kann die gewünschte örtliche Verschleierung leicht umgesetzt werden.

Gemäß einem Aspekt der Erfindung wird zusätzlich eine zeitliche Verschleierung auf die Daten der Segmente der zurückgelegten Wegstrecke angewendet. Diese Maßnahme führt zu einer weiteren Steigerung der Gruppenanonymität.

Gemäß einem Aspekt der Erfindung wird eine ursprünglich geforderte Gruppengröße einer Anonymisierungsgruppe um einen Korrekturfaktor erweitert, der berücksichtigt, dass das Anwenden der örtlichen Verschleierung in Kombination mit einem Unterteilen der erfassten Daten in Segmente der zurückgelegten Wegstrecke erfolgt. Das Rauschintervall für die örtliche Verschleierung kann im Rahmen eines Korrekturfaktors berücksichtigt werden, mit dessen Hilfe eine korrigierte Gruppengröße berechnet werden kann. Mit zunehmender Größe des Rauschintervalls nähert sich dieser Korrekturfaktor zwar dem Wert eins, trotzdem sollte der Korrekturfaktor in Hinblick auf die Bedeutung Gruppenanonymität nicht vernachlässigt werden.

Vorzugsweise wird ein erfindungsgemäßes Verfahren oder eine erfindungsgemäße Vorrichtung in einem autonom oder manuell gesteuerten Fahrzeug, insbesondere einem Kraftfahrzeug, eingesetzt. Alternativ kann die erfindungsgemäße Lösung auch in einem Backend genutzt werden, an das die Daten vom Fahrzeug übermittelt werden.

Weitere Merkmale der vorliegenden Erfindung werden aus der nachfolgenden Beschreibung und den angehängten Ansprüchen in Verbindung mit den Figuren ersichtlich.

Fig. 1    zeigt schematisch ein Verfahren zur Verarbeitung von durch ein Kraftfahrzeug erfassten Daten;

Fig. 2    zeigt eine erste Ausführungsform einer Vorrichtung zur Verarbeitung von durch ein Kraftfahrzeug erfassten Daten;

Fig. 3    zeigt eine zweite Ausführungsform einer Vorrichtung zur Verarbeitung von durch ein Kraftfahrzeug erfassten Daten;

Fig. 4    stellt schematisch ein Kraftfahrzeug dar, in dem eine erfindungsgemäße Lösung realisiert ist; und

Fig. 5    illustriert zurückgelegte Wegstrecken und ihre Unterteilung in Segmente.

Zum besseren Verständnis der Prinzipien der vorliegenden Erfindung werden nachfolgend Ausführungsformen der Erfindung anhand der Figuren detaillierter erläutert. Es versteht sich, dass sich die Erfindung nicht auf diese Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

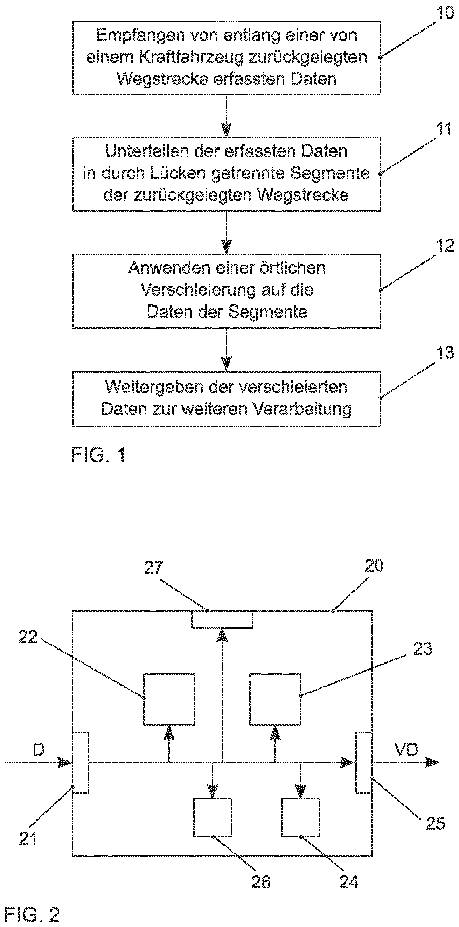

Fig. 1 zeigt schematisch ein Verfahren zur Verarbeitung von durch ein Kraftfahrzeug erfassten Daten. In einem ersten Schritt werden entlang einer vom Kraftfahrzeug zurückgelegten Wegstrecke erfasste Daten empfangen 10. Anschließend werden die erfassten Daten in Segmente der zurückgelegten Wegstrecke unterteilt 11. Die Segmente sind jeweils durch eine Lücke voneinander getrennt. Die Längen der Lücken zwischen den Segmenten werden zufällig aus

einem Längenintervall gewählt. Zudem wird eine örtliche Verschleierung auf die Daten der Segmente der zurückgelegten Wegstrecke angewendet 12. Dabei werden Startpunkte der Segmente um einen Rauschwert aus einem Rauschinterval verschoben. Vorzugsweise erfolgt das Anwenden der örtlichen Verschleierung einzeln für jedes Segment. Zusätzlich kann eine zeitliche Verschleierung auf die Daten der Segmente der zurückgelegten Wegstrecke angewendet werden. Die verschleierten Daten werden schließlich zur weiteren Verarbeitung weitergegeben 13. Vorzugsweise wird der Umstand, dass Segmentierung und örtliche Verschleierung miteinander kombiniert werden, dadurch berücksichtigt, dass eine ursprünglich geforderte Gruppengröße einer Anonymisierungsgruppe um einen Korrekturfaktor erweitert wird.

Fig. 2 zeigt eine vereinfachte schematische Darstellung einer ersten Ausführungsform einer Vorrichtung 20 zur Verarbeitung von durch ein Kraftfahrzeug erfassten Daten. Die Vorrichtung 20 hat einen Eingang 21 zum Empfangen entlang einer vom Kraftfahrzeug zurückgelegten Wegstrecke erfasste Daten D. Eine Datenverarbeitungseinheit 22 unterteilt die erfassten Daten D in Segmente der zurückgelegten Wegstrecke. Die Segmente sind jeweils durch eine Lücke voneinander getrennt. Die Längen der Lücken zwischen den Segmenten werden zufällig aus einem Längen-interval gewählt. Eine Anonymisierungseinheit 23 wendet dann eine örtliche Verschleierung auf die Daten D der Segmente der zurückgelegten Wegstrecke an. Dabei werden Startpunkte der Segmente um einen Rauschwert aus einem Rauschinterval verschoben. Vorzugsweise erfolgt das Anwenden der örtlichen Verschleierung einzeln für jedes Segment. Die für die örtliche Verschleierung notwendigen Parameter können beispielsweise von der Datenverarbeitungseinheit 22 bestimmt und bereitgestellt werden. Die Anonymisierungseinheit 23 kann zudem eingerichtet sein, auch eine zeitliche Verschleierung auf die Daten der Segmente der zurückgelegten Wegstrecke anzuwenden. Die verschleierten Daten VD werden schließlich über einen Ausgang 25 zur weiteren Verarbeitung weitergegeben. Vorzugsweise wird der Umstand, dass Segmentierung und örtliche Verschleierung miteinander kombiniert werden, dadurch berücksichtigt, dass eine ursprünglich geforderte Gruppengröße einer Anonymisierungsgruppe um einen Korrekturfaktor erweitert wird.

Die Datenverarbeitungseinheit 22 und die Anonymisierungseinheit 23 können von einer Kontrolleinheit 24 gesteuert werden. Über eine Benutzerschnittstelle 27 können gegebenenfalls Einstellungen der Datenverarbeitungseinheit 22, der Anonymisierungseinheit 23 oder der Kontrolleinheit 24 geändert werden. Die in der Vorrichtung 20 anfallenden Daten können bei Bedarf in einem Speicher 26 der Vorrichtung 20 abgelegt werden, beispielsweise für eine spätere Auswertung oder für eine Nutzung durch die Komponenten der Vorrichtung 20. Die Datenverarbeitungseinheit 22, die Anonymisierungseinheit 23 sowie die Kontrolleinheit 24 können als dedizierte Hardware realisiert sein, beispielsweise als integrierte Schaltungen. Natürlich können sie aber auch teilweise oder vollständig kombiniert oder als Software implementiert werden, die auf einem geeigneten Prozessor läuft, beispielsweise auf einer GPU. Der Eingang 21 und der Ausgang 25 können als getrennte Schnittstellen oder als eine kombinierte bidirektionale Schnittstelle implementiert sein.

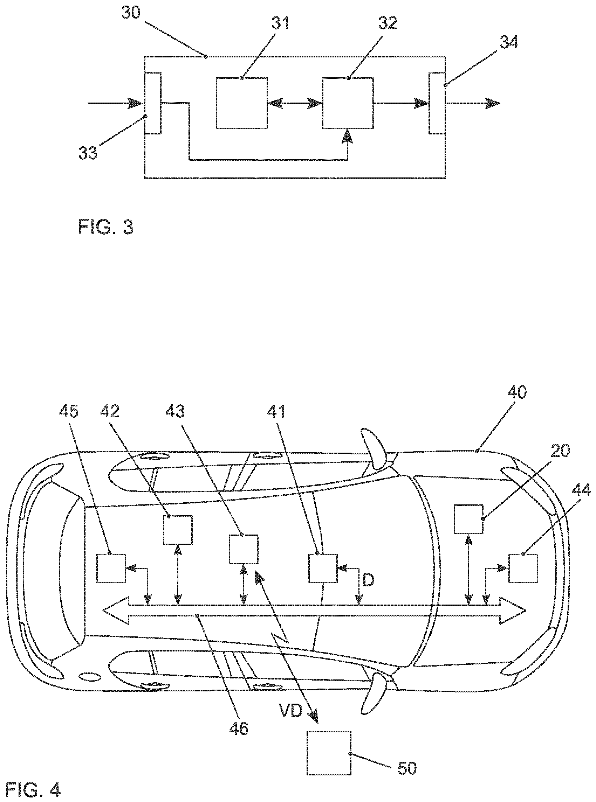

Fig. 3 zeigt eine vereinfachte schematische Darstellung einer zweiten Ausführungsform einer Vorrichtung 30 zur Verarbeitung von durch ein Kraftfahrzeug erfassten Daten. Die Vorrichtung 30 weist einen Prozessor 32 und einen Speicher 31 auf. Beispielsweise handelt es sich bei der Vorrichtung 30 um einen Computer, eine Workstation oder ein Steuergerät. Im Speicher 31 sind Instruktionen abgelegt, die die Vorrichtung 30 bei Ausführung durch den Prozessor 32 veranlassen, die Schritte gemäß einem der beschriebenen Verfahren auszuführen. Die im Speicher 31 abgelegten Instruktionen verkörpern somit ein durch den Prozessor 32 ausführbares Programm, welches das erfindungsgemäße Verfahren realisiert. Die Vorrichtung hat einen Eingang 33 zum Empfangen von Informationen. Vom Prozessor 32 generierte Daten werden über einen Ausgang 34 bereitgestellt. Darüber hinaus können sie im Speicher 31 abgelegt werden. Der Eingang 33 und der Ausgang 34 können zu einer bidirektionalen Schnittstelle zusammengefasst sein.

Der Prozessor 32 kann eine oder mehrere Prozessoreinheiten umfassen, beispielsweise Mikroprozessoren, digitale Signalprozessoren oder Kombinationen daraus.

Die Speicher 26, 31 der beschriebenen Ausführungsformen können volatile und/oder nichtvolatile Speicherbereiche aufweisen und unterschiedlichste Speichergeräte und Speichermedien umfassen, beispielsweise Festplatten, optische Speichermedien oder Halbleiterspeicher.

Die beiden Ausführungsformen der Vorrichtung können in das Kraftfahrzeug integriert sein oder Bestandteil eines mit dem Kraftfahrzeug in Verbindung stehenden Backends sein.

Fig. 4 stellt schematisch ein Kraftfahrzeug 40 dar, in dem eine erfindungsgemäße Lösung realisiert ist. Das Kraftfahrzeug 40 weist ein Sensorsystem 41 auf, mit dem Daten D entlang einer Wegstrecke erfasst werden können, beispielsweise ein Verkehrsgeschehen. Weitere Bestandteile des Kraftfahrzeugs 40 sind ein Navigationssystem 42, eine Datenübertragungseinheit 43 sowie eine Reihe von Assistenzsystemen 44, von denen eines exemplarisch dargestellt ist. Mittels der Datenübertragungseinheit 43 kann eine Verbindung zu einem Backend 50 aufgebaut werden, insbesondere zum Übermitteln von erfassten Daten. Eine Vorrichtung 20 zur Verarbeitung der erfassten Daten D sorgt in diesem Ausführungsbeispiel für eine Segmentierung und eine örtliche Verschleierung der Daten, sodass verschleierte Daten VD an das Backend 50 übermittelt werden. Alternativ können die Segmentierung und die Verschleierung der Daten D auch erst im Backend 50 erfolgen, bevor sie von diesem einem Datennutzer zur Verfügung gestellt werden. Zur Speicherung von Daten ist ein Speicher 45 vorhanden. Der Datenaustausch zwischen den verschiedenen Komponenten des Kraftfahrzeugs 40 erfolgt über ein Netzwerk 46.

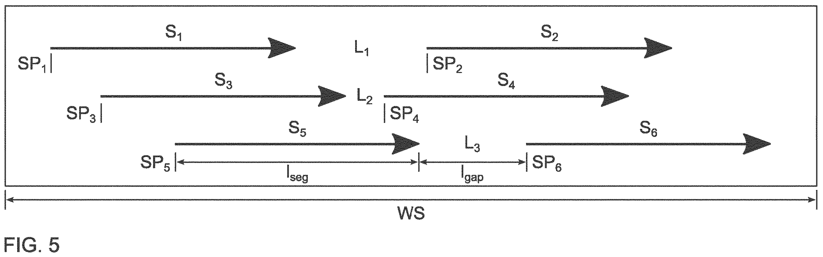

Fig. 5 illustriert zurückgelegte Wegstrecken WS und ihre Unterteilung in Segmente $S_i$. Zur Konkretisierung des

zu lösenden Problems wird in Fig. 5 eine Straße angenommen, auf der sich drei Fahrzeuge befinden, die sich auf dem gleichen Straßenabschnitt befinden, diese allerdings zu unterschiedlichen Zeitpunkten befahren. In der Figur sind sechs Segmente $S_i$ dargestellt, d.h. zwei Segmente $S_i$ je Fahrzeug. Die Daten der Fahrzeuge sind dabei nicht nur mit der Länge $l_{seg}$ segmentiert, sondern es sind darüber hinaus Daten zwischen den Segmenten $S_i$ gelöscht worden. Dabei wurde die Länge $l_{gap}$ der Lücke jeweils innerhalb eines Intervalls der Länge $l_{gap\_rand}$ zufällig gewählt.

Besteht nun die Aufgabe, die unterschiedlichen verschleierten Segmente den ursprünglichen Segmenten $S_i$ zuzuordnen, so können die verschleierten Segmente nur rekombiniert werden, wenn das Ende eines Segments $S_i$ und der Anfang des nächsten Segments $S_i$ einen Abstand im Intervall von $(l_{gap}-l_{gap\_rand})$ bis $(l_{gap}+l_{gap\_rand})$ haben. Wird weiter davon ausgegangen, dass sich die Startpunkte $SP_i$ der jeweiligen Segmente $S_i$ zufällig gleichverteilt sind, so ist die Wahrscheinlichkeit $P_{ag}$, dass nur nicht rekombinierbare Segmente vorliegen, definiert zu:

$$P_{ag} = \frac{\left(l_{gap}+l_{gap\_rand}\right)}{l_{seg} + \left(l_{gap}+l_{gap\_rand}\right)} \quad\quad (1)$$

Da das Ziel ist, möglichst viele Daten zu erhalten, muss die Lücke möglichst klein gehalten werden. Daher gilt $(l_{gap}+l_{gap\_rand})<l_{seg}$. Dies führt zu einer sehr geringen Wahrscheinlichkeit für nicht rekombinierbare Segmente. Beispielsweise sind bei einer Segmentlänge $l_{seg}$ von 10 km und einer Lücke von 500 m-1000 m lediglich nur 10% der Segmente nicht rekombinierbar. Um dennoch die Anonymisierungsgruppengröße zu erhalten, müsste somit die Anzahl der erfassten Fahrzeuge und damit analog die Größe der Verschleierung um den Faktor 10 steigen. Dies würde den Datennutzen deutlich einschränken.

Um dies zu verhindern, werden beide Verfahren miteinander kombiniert. Hierbei wird bevorzugt davon ausgegangen, dass jedes Segment $S_i$ einzeln verschleiert wird. Die Startpunkte $SP_i$ der Segmente $S_i$ werden dazu jeweils um einen Offset $l_{rausch}$ verrauscht. Berücksichtig man dieses nun innerhalb der oben dargestellten Zusammenhänge, so wird die Lücke zwischen den Segmenten proportional zum Rauschwert vergrößert:

$$P_{ag} = \frac{\left(l_{gap}+l_{gap\_rand}+l_{rausch}\right)}{l_{seg} + \left(l_{gap}+l_{gap\_rand}+l_{rausch}\right)} \quad\quad (2)$$

Wird nun weiter davon ausgegangen, dass $(l_{gap}+l_{gap\_rand}+l_{rausch})>l_{seg}$ ist, da besonders am Anfang die Durchdringung der Fahrzeuge sehr gering ist, geht die Wahrscheinlichkeit $P_{ag}$ gegen eins. Unter der Durchdringung ist dabei der Anteil der Fahrzeuge an der Gesamtheit aller Fahrzeuge zu verstehen, der an der Datenerfassung beteiligt ist.

Beispielhaft wird angenommen, dass bei einer Autobahnfahrt alle 10 Minuten ein Messfahrzeug aus dem Schwarm das Segment einer Strecke durchfährt. Bei einer angenommenen Anonymisierungsgruppengröße von fünf und einer Geschwindigkeit von 60 m/s ist dann eine Verschleierung im Bereich von 180 km erforderlich. Dem gegenüber steht eine deutlich kleinere Segmentlänge von 10 km.

Die Kombination der beiden Verfahren erfolgt nun durch einen Korrekturfaktor $k_{seg}$ auf die Gruppengröße k der Anonymisierungsgruppe. Der damit korrigierte Faktor $k_{korr}$ ergib sich zu:

$$k_{korr} = k_{seg} \cdot k = \frac{1}{P_{ag}} \cdot k \quad\quad (3)$$

Unter der Annahme, dass $(l_{gap}+l_{gap\_rand}+l_{rausch})>l_{seg}$ gilt, nähert sich der Korrekturfaktor $k_{seg}$ eins an. Somit ergibt sich durch die Kombination ein deutlich geringerer Einfluss auf die korrigierte Gruppengröße, der vorzugsweise dennoch berücksichtigt werden sollte.

**Bezugszeichenliste**

| 10 | Empfangen von entlang einer von einem Kraftfahrzeug zurückgelegten Wegstrecke erfassten Daten |
|---|---|
| 11 | Unterteilen der erfassten Daten in durch Lücken getrennte Segmente der zurückgelegten Wegstrecke |
| 12 | Anwenden einer örtlichen Verschleierung auf die Daten der Segmente |
| 13 | Weitergeben der verschleierten Daten zur weiteren Verarbeitung |

| 20 | Vorrichtung | 33 | Eingang |
|---|---|---|---|
| 21 | Eingang | 34 | Ausgang |
| 22 | Datenverarbeitungseinheit | 40 | Kraftfahrzeug |
| 23 | Anonymisierungseinheit | 41 | Sensorsystem |

(fortgesetzt)

| 24 | Kontrolleinheit | 42 | Navigationssystem |
| 25 | Ausgang | 43 | Datenübertragungseinheit |
| 26 | Speicher | 44 | Assistenzsystem |
| 27 | Benutzerschnittstelle | 45 | Speicher |
| 30 | Vorrichtung | 46 | Netzwerk |
| 31 | Speicher | 50 | Backend |
| 32 | Prozessor | | |
| D | Datum | | |
| $l_{gap}$ | Länge einer Lücke | | |
| $L_i$ | Lücke | | |
| $l_{seg}$ | Länge eines Segments | | |
| $S_i$ | Segment | | |
| $SP_i$ | Startpunkt eines Segments | | |
| VD | Verschleiertes Datum | | |
| WS | Wegstrecke | | |

**Patentansprüche**

1. Verfahren zur Verarbeitung von durch ein Kraftfahrzeug (40) erfassten Daten, mit den Schritten:

   - Empfangen (10) von entlang einer vom Kraftfahrzeug (40) zurückgelegten Wegstrecke (WS) erfassten Daten (D);
   - Unterteilen (11) der erfassten Daten (D) in Segmente ($S_i$) der zurückgelegten Wegstrecke (WS);
   - Anwenden (12) einer örtlichen Verschleierung auf die Daten (D) der Segmente ($S_i$) der zurückgelegten Wegstrecke (WS); und
   - Weitergeben (13) der verschleierten Daten (VD) zur weiteren Verarbeitung; **dadurch gekennzeichnet, dass** die Segmente ($S_i$) eine Länge $l_{seg}$ aufweisen und jeweils durch eine Lücke ($L_i$) voneinander getrennt sind, wobei die den Lücken ($L_i$) entsprechenden Daten (D) gelöscht werden und die Längen $l_{gap}$ der Lücken ($L_i$) zwischen den Segmenten ($S_i$) zufällig aus einem Längenintervall der Länge $l_{gap\_rand}$ gewählt sind, mit $l_{gap}+l_{gap\_rand}<l_{seg}$, und dass bei der örtlichen Verschleierung Startpunkte ($SP_i$) der Segmente ($S_i$) um einen Offset $l_{rausch}$ aus einem vorgegebenen Intervall verschoben werden, mit $l_{gap}+l_{gap\_rand}+l_{rausch}>l_{seg}$.

2. Verfahren gemäß Anspruch 1, wobei das Anwenden (12) der örtlichen Verschleierung einzeln für jedes Segment ($S_i$) erfolgt.

3. Verfahren gemäß Anspruch 1 oder 2, wobei zusätzlich eine zeitliche Verschleierung auf die Daten (D) der Segmente ($S_i$) der zurückgelegten Wegstrecke (WS) angewendet wird.

4. Computerprogramm mit Instruktionen, die bei Ausführung durch einen Computer den Computer zur Ausführung der Schritte eines Verfahrens gemäß einem der Ansprüche 1 bis 3 zur Verarbeitung von durch ein Kraftfahrzeug (40) erfassten Daten veranlassen.

5. Vorrichtung (20) zur Verarbeitung von durch ein Kraftfahrzeug (40) erfassten Daten, mit:

   - einem Eingang (21) zum Empfangen (10) von entlang einer vom Kraftfahrzeug (40) zurückgelegten Wegstrecke (WS) erfassten Daten (D);
   - einer Datenverarbeitungseinheit (22) zum Unterteilen (11) der erfassten Daten (D) in Segmente ($S_i$) der zurückgelegten Wegstrecke (WS);
   - einer Anonymisierungseinheit (23) zum Anwenden (12) einer örtlichen Verschleierung auf die Daten (D) der Segmente ($S_i$) der zurückgelegten Wegstrecke (WS); und
   - einem Ausgang (26) zum Weitergeben (13) der verschleierten Daten (VD) zur weiteren Verarbeitung;

   **dadurch gekennzeichnet, dass** die Segmente ($S_i$) eine Länge $l_{seg}$ aufweisen und jeweils durch eine Lücke ($L_i$) voneinander getrennt sind, wobei die den Lücken ($L_i$) entsprechenden Daten (D) gelöscht werden und die Längen $l_{gap}$

der Lücken ($L_i$) zwischen den Segmenten ($S_i$) zufällig aus einem Längenintervall der Länge $l_{gap\_rand}$ gewählt sind, mit $l_{gap}+l_{gap\_rand}<l_{seg}$, und dass bei der örtlichen Verschleierung Startpunkte ($SP_i$) der Segmente ($S_i$) um einen Offset $l_{rausch}$ aus einem vorgegebenen Intervall verschoben werden, mit $l_{gap}+l_{gap\_rand}+l_{rausch}>l_{seg}$.

6. Kraftfahrzeug (40), **dadurch gekennzeichnet, dass** es eine Vorrichtung (20) gemäß Anspruch 5 aufweist oder eingerichtet ist, ein Verfahren gemäß einem der Ansprüche 1 bis 3 zum Verarbeiten von durch das Kraftfahrzeug (40) erfassten Daten auszuführen.

7. Backend (50) zur Verarbeitung von durch ein Kraftfahrzeug (40) erfassten Daten, **dadurch gekennzeichnet, dass** es eine Vorrichtung (20) gemäß Anspruch 5 aufweist oder eingerichtet ist, ein Verfahren gemäß einem der Ansprüche 1 bis 3 zum Verarbeiten von durch das Kraftfahrzeug (40) erfassten Daten auszuführen.

**Claims**

1. Method for processing data captured by a motor vehicle (40), comprising the steps of:

   - receiving (10) data (D) captured along a route (WS) traveled by the motor vehicle (40);
   - dividing (11) the captured data (D) into segments ($S_i$) of the route (WS) traveled;
   - applying (12) a local concealment to the data (D) of the segments ($S_i$) of the route (WS) traveled; and
   - passing on (13) the concealed data (VD) for further processing;

   **characterized in that** the segments ($S_i$) have a length $l_{seg}$ and are each separated from each other by a gap ($L_i$), the data (D) corresponding to the gaps ($Li$) being deleted and the lengths $l_{gap}$ of the gaps ($L_i$) between the segments ($S_i$) being randomly selected from a length interval of length $l_{gap\_rand}$, with $l_{gap}+l_{gap\_rand}<l_{seg}$, **and in that** during local concealment, starting points ($SP_i$) of the segments ($S_i$) are shifted by an offset $l_{rausch}$ from a given interval, with $l_{gap}+l_{gap\_rand}+l_{rausch}>l_{seg}$.

2. Method according to claim 1, wherein the application (12) of the local concealment is carried out individually for each segment ($S_i$).

3. Method according to either claim 1 or claim 2, wherein additionally a temporal concealment is applied to the data (D) of the segments ($S_i$) of the route (WS) traveled.

4. Computer program having instructions that, when executed by a computer, cause the computer to execute the steps of a method according to any of claims 1 to 3 for processing data captured by a motor vehicle (40).

5. Device (20) for processing data captured by a motor vehicle (40), comprising:

   - an input (21) for receiving (10) data (D) captured along a route (WS) traveled by the motor vehicle (40);
   - a data processing unit (22) for dividing (11) the captured data (D) into segments ($S_i$) of the route (WS) traveled;
   - an anonymization unit (23) for applying (12) a local concealment to the data (D) of the segments ($S_i$) of the route (WS) traveled; and
   - an output (26) for passing on (13) the concealed data (VD) for further processing;

   **characterized in that** the segments ($S_i$) have a length $l_{seg}$ and are each separated from each other by a gap ($Li$), the data (D) corresponding to the gaps ($L_i$) being deleted and the lengths $l_{gap}$ of the gaps ($L_i$) between the segments ($S_i$) being randomly selected from a length interval of length $l_{gap\_rand}$, with $l_{gap}+l_{gap\_rand}<l_{seg}$, **and in that** during local concealment, starting points ($SP_i$) of the segments ($S_i$) are shifted by an offset $l_{rausch}$ from a given interval, with $l_{gap}+l_{gap\_rand}+l_{rausch}>l_{seg}$.

6. Motor vehicle (40), **characterized in that** it has a device (20) according to claim 5 or is configured to carry out a method according to any of claims 1 to 3 for processing data captured by the motor vehicle (40).

7. Backend (50) for processing data captured by a motor vehicle (40), **characterized in that** it has a device (20) according to claim 5 or is configured to carry out a method according to any of claims 1 to 3 for processing data captured by the motor vehicle (40).

**Revendications**

1. Procédé permettant le traitement de données acquises par un véhicule automobile (40), comportant les étapes consistant à :

    - recevoir (10) des données (D) acquises le long d'un trajet (WS) parcouru par le véhicule automobile (40) ;
    - diviser (11) les données (D) acquises en segments ($S_i$) du trajet (WS) parcouru ;
    - appliquer (12) un masquage local aux données (D) des segments ($S_i$) du trajet (WS) parcouru ; et
    - transmettre (13) des données masquées (VD) pour le traitement ultérieur ;

    **caractérisé en ce que** les segments ($S_i$) présentent une longueur $l_{seg}$ et sont respectivement séparés les uns des autres par un espace ($L_i$), dans lequel les données (D) correspondant aux espaces ($L_i$) sont effacées et les longueurs $l_{gap}$ des espaces ($L_i$) entre les segments ($S_i$) sont choisies de manière aléatoire à partir d'un intervalle de longueurs de la longueur $l_{gap\_rand}$, avec $l_{gap}+l_{gap\_rand}<l_{seg}$, **et en ce que,** lors du masquage local, des points de départ ($SP_i$) des segments ($S_i$) sont décalés d'un décalage $l_{rausch}$ à partir d'un intervalle prédéfini, avec $l_{gap}+l_{gap\_rand}+l_{rausch}>l_{seg}$.

2. Procédé selon la revendication 1, dans lequel l'application (12) du masquage local est effectuée individuellement pour chaque segment ($S_i$).

3. Procédé selon la revendication 1 ou 2, dans lequel on applique en outre un masquage temporel aux données (D) des segments ($S_i$) du trajet (WS) parcouru.

4. Programme d'ordinateur comportant des instructions, lesquelles, lors de leur exécution par un ordinateur, amènent l'ordinateur à exécuter les étapes d'un procédé selon l'une quelconque des revendications 1 à 3 pour le traitement de données acquises par un véhicule automobile (40).

5. Dispositif (20) permettant le traitement de données acquises par un véhicule automobile (40), comportant :

    - une entrée (21) pour la réception (10) de données (D) acquises le long d'un trajet (WS) parcouru par le véhicule automobile (40) ;
    - une unité de traitement de données (22) pour la division (11) des données (D) acquises en segments ($S_i$) du trajet (WS) parcouru ;
    - une unité d'anonymisation (23) pour l'application (12) d'un masquage local aux données (D) des segments ($S_i$) du trajet (WS) parcouru ; et
    - une sortie (26) pour la transmission (13) des données masquées (VD) pour le traitement ultérieur ;

    **caractérisé en ce que** les segments ($S_i$) présentent une longueur $l_{seg}$ et sont respectivement séparés les uns des autres par un espace ($L_i$), dans lequel les données (D) correspondant aux espaces ($L_i$) sont effacées et les longueurs $l_{gap}$ des espaces ($L_i$) entre les segments ($S_i$) sont choisies de manière aléatoire à partir d'un intervalle de longueurs de la longueur $l_{gap\_rand}$, avec $l_{gap}+l_{gap\_rand}<l_{seg}$, **et en ce que,** lors du masquage local, des points de départ ($SP_i$) des segments ($S_i$) sont décalés d'un décalage $l_{rausch}$ à partir d'un intervalle prédéfini, avec $l_{gap}+l_{gap\_rand}+l_{rausch}>l_{seg}$.

6. Véhicule automobile (40), **caractérisé en ce qu'**il présente un dispositif (20) selon la revendication 5 ou est configuré pour exécuter un procédé selon l'une des revendications 1 à 3 pour le traitement de données acquises par le véhicule automobile (40).

7. Unité dorsale (50) permettant le traitement de données acquises par un véhicule automobile (40), **caractérisée en ce qu'**elle présente un dispositif (20) selon la revendication 5 ou est configurée pour exécuter un procédé selon l'une des revendications 1 à 3 pour le traitement de données acquises par le véhicule automobile (40).

Empfangen von entlang einer von
einem Kraftfahrzeug zurückgelegten
Wegstrecke erfassten Daten

10

Unterteilen der erfassten Daten
in durch Lücken getrennte Segmente
der zurückgelegten Wegstrecke

11

Anwenden einer örtlichen
Verschleierung auf die
Daten der Segmente

12

Weitergeben der verschleierten
Daten zur weiteren Verarbeitung

13

FIG. 1

FIG. 2

FIG. 3

FIG. 4

FIG. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011106295 A1
- DE 102015213393 A1
- DE 102016225287 A1
- DE 102018006281 A1
- US 8255393 B1
- US 20180261021 A1